Europäisches Patentamt

European Patent Office

Office européen des brevets

(11) Numéro de publication: **0 014 653**
**B1**

(12) **FASCICULE DE BREVET EUROPEEN**

(45) Date de publication du fascicule du brevet: **03.10.84**

(51) Int. Cl.³: **H 04 N 7/16**

(21) Numéro de dépôt: **80400170.9**

(22) Date de dépôt: **04.02.80**

(54) Système de transmission d'information entre un centre d'émission et des postes récepteurs, ce système étant muni d'un moyen de contrôle de l'accès à l'information transmise.

(30) Priorité: **06.02.79 FR 7902995**

(43) Date de publication de la demande:
**20.08.80 Bulletin 80/17**

(45) Mention de la délivrance du brevet:
**03.10.84 Bulletin 84/40**

(84) Etats contractants désignés:
**BE DE GB IT NL SE**

(56) Documents cités:
**EP-A-0 014 652**
**EP-A-0 014 654**
**FR-A-2 117 478**
**FR-A-2 316 821**

(73) Titulaire: **Etablissement Public de Diffusion dit "Télédiffusion de France"**
**21-27 rue Barbès**
**F-92120 Montrouge (FR)**

(73) Titulaire: **L'Etat Français représenté par le Secrétaire d'Etat aux Postes et Télécommunications (Centre National d'Etudes des Télécommunications) 38-40 rue du Général Leclerc**
**F-92131 Issy-les-Moulineaux (FR)**

(72) Inventeur: **Guillou, Louis Claude**
**7, rue de l'Ise**
**F-35230 Bourgbarre (FR)**

(74) Mandataire: **Mongrédien, André et al c/o BREVATOME 25, rue de Ponthieu**
**F-75008 Paris (FR)**

Courier Press, Leamington Spa, England.

## Description

La présente invention a pour objet un système de transmission d'information entre un centre d'émission et des postes récepteurs, ce système étant muni d'un moyen de contrôle de l'accès à l'information transmise.

L'invention trouve une application dans la transmission et l'affichage d'informations sur des récepteurs de télévision à des fins quelconques de distraction, d'information, ou d'enseignement. Elle s'applique de manière privilégiée au système dit "ANTIOPE" (Acquisition Numérique et Télévisualisation d'Images Organisées en Pages d'Ecriture), au système dit "TITAN" (Terminal Interactif de Télétexte à Appel par Numérotation), au système dit EPEOS (Enregistrement Programmé des Emissions sur Ordre des Sources).

On sait qu'il s'agit essentiellement,

— pour le premier, d'un système de vidéographie diffusée, permettant d'insérer sur des voies de télévision des informations alphanumériques organisées en pages et en magazine;
— pour le second, d'un système de vidéographie interactive compatible avec le système ANTIOPE et permettant l'accès à des bases de données (informations générales, annulaires, etc.) et à des services interactifs (transactions, messages, enseignement) par le réseau téléphonique;
— pour le troisième, d'un système de messagerie de programmes consistant à offrir, par l'intermédiaire d'une voie de diffusion de données, la télécommande depuis une source d'émission, de l'action d'enregistrement par un équipement récepteur (magnétoscope par exemple) d'un programme télévisuel présélectionné.

Ces trois systèmes utilisent, pour la diffusion de l'information, une procédure dite "DIDON" (Diffusion de Données Numériques) qui est une procédure de diffusion par paquets, compatible avec la diffusion du signal de télévision.

L'avènement des services de type ANTIOPE, TITAN ou EPEOS soulève la question de leur taxation, c'est-à-dire de la mise en oeuvre d'un système permettant l'identification et le contrôle des audiences. Cette question se pose d'ailleurs plus généralement pour tout service diffusé tendant à rentabiliser les réseaux de diffusion par une meilleure utilisation des ressources.

Une taxation de type à abonnement constitue une relation à la fois souple et durable entre un service et ses usagers. C'est en diffusion surtout qu'un tel mode de taxation trouve sa justification.

Une taxation de type "à la consommation" peut également être retenue; ce mode de taxation est fondamental pour les systèmes "interactifs" (dans lesquels un dialogue s'insature entre l'abonné et la source d'information, comme c'est le cas pour TITAN); mais il reste secondaire dans les systèmes à diffusion (dans lesquels les informations sont transmises de manière unidirectionelle vers des abonnés, comme c'est le cas pour ANTIOPE).

Des systèmes intermédiaires, dits "quasi-interactifs" peuvent se présenter, dans lesquels on modifie sans cesse le contenu de la source de diffusion pour satisfaire aux requêtes des usagers qui sont transmises par un réseau public de données. L'avènement des nouveaux moyens de diffusion à très grande capacité (satellites) développera beaucoup ce mode quasi-interactif, rendant alors nécessaire la mise en oeuvre d'un système de contrôle de l'accès à l'information offerte.

Ce problème du contrôle d'accès pose avant tout celui du verrouillage de l'information à l'émission et du déverrouillage à la réception, problème qui doit naturellement être résolu en tenant compte de la spécificité du système à contrôler.

La présente invention a justement pour objet un moyen général de contrôle de l'accès à l'information, qui s'applique à un grand nombre de systèmes de transmission d'information, en particulier aux trois systèmes évoquées plus haut.

Selon l'invention, on utilise essentiellement un système à double clé:

— une clé de service K, qui permet de verrouiller l'information; cette clé change de manière aléatoire à des intervalles relativement courts, de l'ordre de quelques minutes,
— une clé d'abonnement, pouvant prendre plusieurs valeurs $C_i$ selon le type d'abonnement; cette clé change elle aussi de manière aléatoire mais à des intervalles longs, de l'ordre du mois. Cette clé d'abonnement est inscrite sur un support d'abonnement introduit dans chaque poste récepteur. Des messages particuliers sont composés à l'émission et transmis avec les données. Ces messages permettent de restituer la clé de service dans le poste récepteur et d'ouvrir la serrure électronique qui verrouille l'information transmise.

De façon plus précise, l'invention a pour objet un système de transmission d'information entre un centre d'émission et des postes récepteurs, le centre d'émission comprenant un circuit de formation de signaux véhiculant ladite information, un automate de verrouillage utilisant une clé de service K, cet automate recevant des signaux véhiculant l'information et délivrant des signaux verrouillés qui sont dirigés ensuite vers un organe d'émission desdits signaux, chaque poste récepteur comprenant un organe de réception des signaux transmis, un automate de déverrouillage relié à l'organe de réception, cet automate déverrouillant les signaux verrouillés en utilisant la clé de service K et délivrant des signaux déverrouillés qui sont dirigés vers un moyen de visualisation de l'information, caractérisé en ce qu'il comprend en outre:

A) un centre de gestion d'abonnement engendrant une pluralité de signaux constituent des clés d'abonnement $C_i$, ces clés d'abonnement changeant de manière aléatoire à des intervalles relativement longs de l'ordre du mois;

B) dans le centre d'émission:

a) un générateur apte à engendrer une clé de service K changeant de manière aléatoire à des intervallves relativement courts de l'ordre de quelques minutes,

b) un circuit de formation de messages $M_i$ obtenus à partir desdites clés d'abonnement $C_i$ et de la clé de service K par un algorithme paramétré par les clés d'abonnement, soit $M_i=F_{C_i}(K)$, ce circuit délivrant autant de messages qu'il y a de clés d'abonnement, ces messages changeant avec la clé de service, l'ensemble des messages $M_i$ étant ensuite dirigé vers l'organe d'émission,

C) dans chaque poste récepteur:

a) un support d'abonnement sur lequel est inscrit un signal correspondant à l'une au moins des clés d'abonnement $C_i$,

b) un circuit de restitution de la clé de service recevant d'une part les messages $M_i$ reçus et, d'autre part, la clé d'abonnement $C_i$, ce circuit déroulant un algorithme $K=G_{C_i}(M_i)$ qui permet de restituer le signal correspondant à la clé de service K employée dans le poste d'émission à partir des messages $M_i$ reçus et de la clé d'abonnement $C_i$,

c) l'automate de déverrouillage est relié au circuit de restitution d'ou il reçoit la clé de service K,

D) au moins un poste de changement des supports d'abonnement, ce poste étant relié au centre de gestion d'abonnement d'ou il reçoit les signaux correspondant aux différentes clés d'abonnement $C_i$ engendrées par ce centre, chaque poste étant apte à recevoir temporairement des supports d'abonnement et à y inscrire durablement l'une des clés d'abonnement $C_i$.

De toute façon, les caractéristiques et avantages de l'invention apparaîtront mieux après la description qui suit d'exemples de réalisation donnés à titre explicatif et nullement limitatif. Cette description se réfère à des dessins annexés sur lesquels:

— la figure 1 représente le schéma synoptique du système de l'invention;
— la figure 2 est un diagramme illustrant les flux d'information dans le système de la figure précédente;

— la figure 3 illustre un exemple d'application de l'invention à un système de videographie de type ANTIOPE.

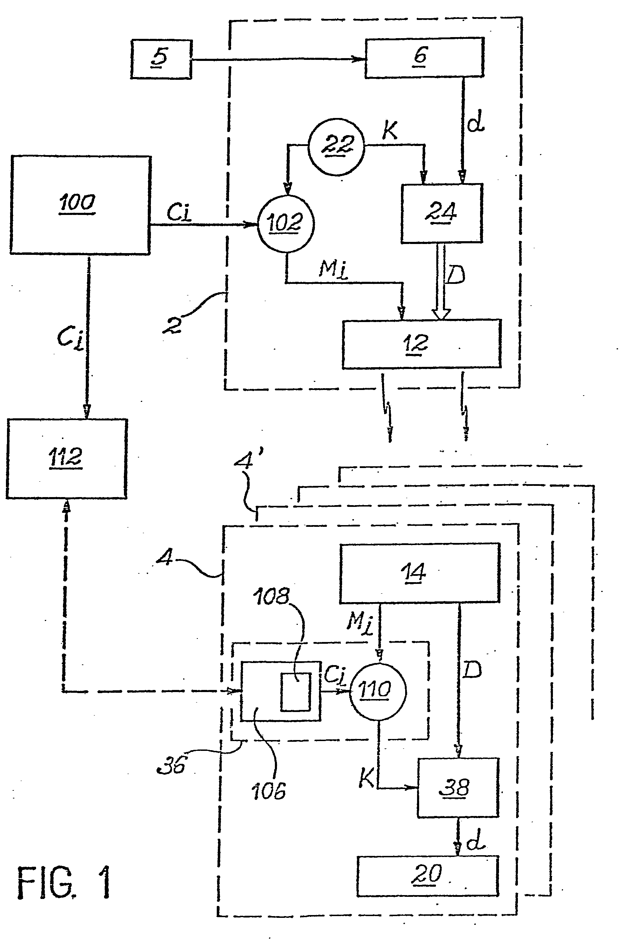

Le système représenté sur la figure 1 comprend tout d'abord un centre de gestion d'abonnements 100 qui engendre une pluralité de signaux constituant des clés d'abonnement $C_i$, ces clés d'abonnement changeant de manière aléatoire à des intervalles relativement longs de l'ordre du mois.

Le système de transmission est organisé autour d'un centre d'émission 2 qui comprend:

a) un circuit 6 de formation de signaux $d$ véhiculant une information;

b) un générateur 22 d'un signal constituant une clé de service K, cette clé changeant de manière aléatoire à des intervalles relativement courts de l'ordre de quelques minutes;

c) un automate de verrouillage 24 utilisant la clé de service K; cet automate reçoit les signaux $d$ véhiculant l'information et délivre des signaux verrouillés D;

d) un circuit 102 de formation de messages $M_i$ obtenus à partir des clés d'abonnement $C_i$ et de la clé de service K par un algorithme paramétré par les clés d'abonnement, soit $M_i=F_{C_i}(K)$, ce circuit délivrant autant de messages qu'il y a de clés d'abonnement; ces messages changeant avec la clé de service; ils sont dirigés vers l'organe d'émission 12;

e) un organe 12 d'émission des signaux d'information et des messages.

Le système comprend, à l'autre extrémité, des récepteurs qui comprennent chacun:

a) un organe 14 de réception des signaux transmis;

b) un support 106 qui comprend une mémoire d'abonnement 108 dans laquelle est inscrit un signal correspondant à l'une au moins des clés d'abonnement $C_i$;

c) un circuit 110 de restitution de la clé de service; ce circuit reçoit, d'une part les messages $M_i$ et, d'autre part, la clé d'abonnement $C_i$; ce circuit est apte à dérouler un algorithme $K=G_{C_i}(M_i)$ qui permet de restituer le signal correspondant à la clé du service K employée dans le poste d'émission à partir des messages $M_i$ reçus et de la clé d'abonnement $C_i$;

d) un automate de déverrouillage 38 qui est relié, d'une part, à l'organe de réception 14 d'où il reçoit les signaux verrouillés D et, d'autre part, au circuit de restitution 110 d'où il reçoit la clé de service K; cet automate utilise la clé de service et déverrouille les signaux verouillés D; il délivre des signaux déverrouillés $d$ qui sont ensuite dirigés vers

e) un moyen 20 de visualisation qui est par exemple un tube d'affichage.

Le système représenté comprend encore au moins un poste de chargement 112 des supports d'abonnement, ce poste étant relié au centre de gestion d'abonnement 100 d'où il reçoit les signaux correspondant aux dif-

férentes clés d'abonnement $C_i$ engendrées par ce centre; chaque poste 112 est apte à recevoir temporairement des supports d'abonnement et à inscrire durablement dans leur mémoire 108 l'une des clés d'abonnement $C_i$.

Pour illustrer le fonctionnement de ce système à double clé, on peut prendre un exemple de schéma d'abonnement qui utiliserait quatre types d'abonnement: un mois, trois mois, six mois et un an. En plus de sa durée, un abonnement est caractérisé par son mois de début. Avec un tel schéma, durant un mois donné et pour un service donné, il y a donc 22 clés d'abonnement susceptibles d'être utilisées par les usagers: une clé mensuelle, trois clés trimestrielles, six clés semestrielles et douze clés annuelles.

Chaque mois, le centre de gestion des taxations 100 fournit à chaque centre d'émission 2 une liste de 22 clés d'abonnement $C_i$ en cours pour chaque service diffusé par ce centre. En outre, il fournit aux postes de chargement 112 une autre liste de quatre clés qui vont débuter le mois suivant (un mois, trois mois, six mois et un an), pour chaque service, avec les tarifs des abonnements.

Une machine appropriée, installée dans chaque point de vente, inscrit certaines de ces clés sous forme de blocs d'abonnements dans les mémoires 108 des supports. Ces supports sont par exemple des cartes intelligentes de type "carte de crédit". Ces cartes sont ensuite introduites par les usagers du service dans leur poste récepteur 4.

Pour chaque service payant, toutes les cinq minutes environ, une nouvelle clé du service K est engendrée au hasard, par chaque centre de diffusion intéressé. Ainsi, au cours d'une session d'un service (une heure ou quelques heures), quelques dizaines de clés du service peuvent se succéder.

Dès qu'un centre de diffusion engendre une nouvelle clé de service K, il calcule, pour chaque clé d'abonnement en cours $C_i$ pour ce service, un message $M_i$ par un algorithme $M_i=F_{C_i}(K)$, les clés $C_i$ jouant le rôle de paramètres.

Ainsi, pour un service doté du schéma d'abonnement indiqué plus haut, à tout instant, 22 messages différents sont en vigueur. La durée de vie d'un message est égale à celle de la clé du service K, et pour un service donné, à tout instant, il existe autant de messages qu'il y a de clés d'abonnement en cours.

L'ensemble des messages $M_i$ en vigueur constitue l'information de contrôle d'accès associée au service diffusé.

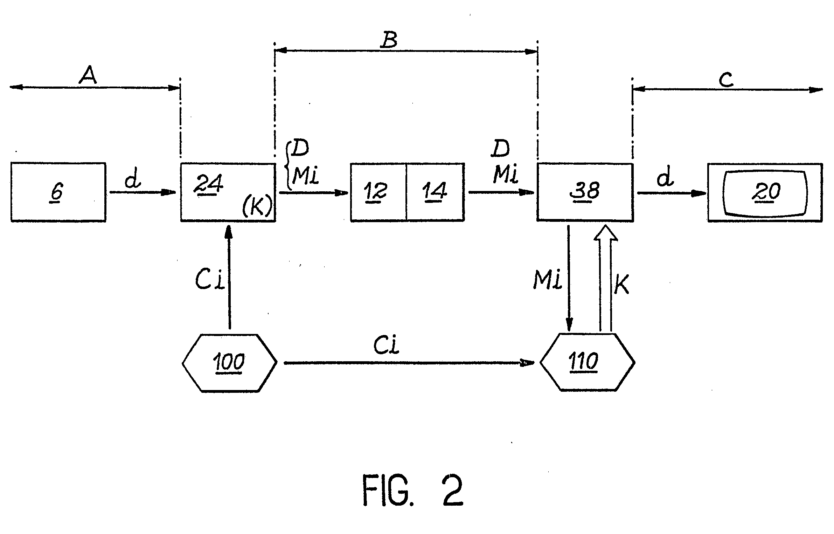

La figure 2 représente un diagramme des flux d'information dans le système de la figure 1. Les moyens déjà représentés sur la première figure portent, sur la seconde, les mêmes références, à savoir la source 6 de signaux clairs $d$, l'automate de verrouillage 24 qui délivre les signaux verrouillés D, les moyens 12 et 14 d'émission et de réception; le circuit de déverrouillage 38 qui délivre les signaux déverrouillés $d$, l'organe de visualisation 20, le centre de gestion des abonnements 100 et enfin le contrôleur d'accès 110 ou carte d'abonnement.

Dans la zone A, en amont de l'automate de verrouillage, l'information est en clair; dans la zone B, elle est verrouillée. Elle est à nouveau en clair en aval de l'automate de déverrouillage 38. L'information émanant du centre de gestion 100 consiste en des clés d'abonnement $C_i$. Le contrôleur d'accès 110 reçoit, pour sa part, lesdites clés $C_i$ et les messages $M_i$. Il en tire la clé de service K nécessaire au déverrouillage.

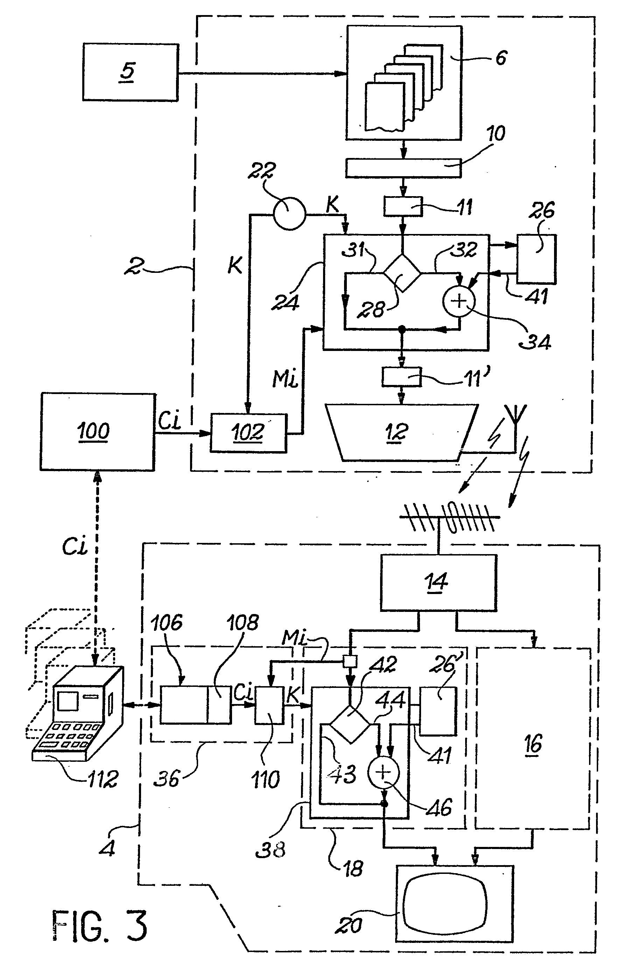

L'invention trouve une application privilégiée dans le contrôle d'accès à l'information diffusée par un système ANTIOPE. Cette application particulière est décrite par la figure 3. Cette figure est identique à la figure 7 de la demande de brevet européen EP 0 014 652 publiee le 20.08.80 et intitulée: "Système de vidéotex muni de moyens de contrôle d'accès à l'information". Cette application particulière ne sera donc que brièvement décrite ici.

Le circuit de la figure 3 comprend des moyens qui ont déjà été représentés sur la figure 1 et qui portent, pour simplifier, les mêmes références. Le circuit comprend en outre:

A) dans le centre d'émission:
— un circuit 10 de mémorisation d'un magazine ANTIOPE composé par le circuit 6, ce magazine comprenant des pages organisées en rangées et deux jonctions 11 et 11' entre lesquelles s'insère un automate de verrouillage 24. Cet automate comprend:

i) un comparateur 28 à une entrée reliée au circuit 10 de mémorisation du magazine d'où il reçoit des octets clairs; ce comparateur est apte à distinguer, parmi ces octets clairs, ceux dont les septième et sixième éléments binaires sont nuls et qui sont des octets de commande; ce comparateur possède deux sorties 31 et 32, la première véhiculant ces octets à septième et sixième éléments binaires nuls et qui est reliée au multiplexeur 12 de diffusion (à travers la jonction 11'), et la seconde véhiculant les octets clairs $d$ dont les septième et/ou sixième éléments binaires ne sont pas nuls;

ii) un circuit logique 34 de type OU-exclusif à deux entrées, l'une reliée à la deuxième sortie 32 du comparateur 28 d'où elle reçoit les octets clairs à sixième et septième éléments binaires non nuls, ce circuit logique possède une sortie qui véhicule des octets chiffrés impairse D qui sont dirigés ensuite (à travers la jonction 11') vers le multiplexeur de diffusion 12.

Le centre d'émission comprend encore un générateur 26 d'octets chiffrants commandé par l'automate 24 d'où il reçoit des octets indiquant les numéros de page et les numéros de rangées des données à transmettre et le signal correspondant à la clé de service K; ce générateur d'octets 26 délivre, pour chaque octet de donnée d'une rangée visualisable, un

octet chiffrant $C_j$, cet octet possédant un huitième élément binaire de parité et des septième et sixième éléments binaires nuls, cet octet étant appliqué à la seconde entrée du circuit OU exclusif 34.

B) dans chaque poste récepteur:
— une voie 16 de traitement des signaux vidéo-image, en parallèle sur l'automate de déverrouillage 38. Cet automate comprend:

i) un comparateur 42 à une entrée recevant des octets chiffrés; ce comparateur est apte à distinguer, parmi ces octets chiffrés, ceux dont les septième et sixième éléments binaires sont nuls, ce comparateur ayant deux sorties 43 et 44, la première véhiculant ces octets dont les septième et sixième éléments binaires sont nuls, cette première sortie étant reliée à l'organe de visualisation 20, la seconde véhiculant les octets chiffrés $D_j$ dont les septième et sixième éléments binaires ne sont pas nuls.

ii) un circuit logique 46 de type OU-exclusif à deux entrées, l'une reliée à la sortie 44 du comparateur d'où elle reçoit les octets chiffrés D, ce circuit logique ayant une sortie qui véhicule des octets déchiffrés $d$ qui sont ensuite dirigés vers l'organe de visualisation 20.

iii) un générateur d'octets déchiffrants, 26′ commandé par l'automate de déverrouillage d'où il reçoit les octets indiquant les numéros de page, les numéros de rangées des données transmises, et, le signal correspondant à la clé de service en cours K; ce générateur d'octets déchiffrants possède une sortie 41 qui délivre, pour chaque octet chiffré reçu, un octet déchiffrant possédant un élément binaire de poids fort qui est forcé à zéro et des septième et sixième éléments binaires nuls, ces octets étant appliqués à la seconde entrée de la porte 46.

La formation des messages $M_i$ à partir des clés d'abonnement $C_i$ de la clé de service K peut s'effectuer avantageusement de la manière suivante:

Le circuit 102 du centre d'émission est organisé autour d'un microprocesseur programmé pour mettre en oeuvre un algorithme qui s'appuie sur deux corps de Galois ayant pour caractéristiques les nombres premiers de Mersenne $2^{61}-1$ et $2^{127}-1$. Cet algorithme utilise des clés d'abonnement $C_i$ de 128 éléments binaires et une clé du service K de 56 éléments binaires, de la manière suivante:

1. on forme un mot $\pi$ de redondance de confusion qui comrpend 61 éléments binaires engendrés au hasard à chaque mise en oeuvre de l'algorithme;

2. on calcule $\pi^{-1}$, inverse de $\pi$ modulo $2^{61}-1$ par un programme arithmétique utilisant une variante de l'algorithme d'Euclide;

3. on effectue une première multiplication par un autre programme arithmétique: $v=K . \pi^{-1}$, modulo $(2^{61}-1)$;

4. on calcule $\gamma$, inverse de C modulo $2^{127}-1$, par un programme similaire à celui de 2);

5. enfin, on calcule le message par un programme similaire à 3°:

$$M=\gamma . (v+2^{64} . \pi) \text{ modulo } (2^{127}-1).$$

Les messages ayant été formés de cette manière, l'algorithme à dérouler dans le circuit 110 pour restituer la clé de service K à partir d'un message $M_i$ et d'une clé d'abonnement $C_i$ est le suivant:

1. le message $M_i$ (127 éléments binaires utiles) est saisi octet par octet et une multiplication par $C_i$ est effectuée sur le premier corps CG $(2^{127}-1)$. On forme ainsi un mot $\mu$:

$$\mu=M . C \text{ modulo } (2^{127}-1).$$

D'après la construction de M à l'émission, les éléments binaires 1 à 61 de $\mu$ représentent le mot $v$, tandis que les éléments binaires 65 à 125 représentent le mot $\pi$. Bien entendu, les éléments binaires 62, 63, 64, 126 et 127 doivent être nuls. S'ils ne le sont pas, on met le mot $v$ à zéro avant de continuer le calcul.

2. $\pi$ et $v$ sont multipliés sur le deuxième corps $CG(2^{61}-1)$, ce qui fait disparaître le redondance de confusion et l'on obtient

$$K=v . \pi \text{ modulo } (2^{61}-1);$$

3. Les 56 éléments binaires utiles de K sont alors mis sous forme de huit octets impairs.

En ce qui concerne les moyens permettant de réaliser un support 36 contenant une mémoire d'abonnement 108 et un circuit 110 apte à restituer la clé de service, ils font l'objet, avec le poste de chargement 112, d'une autre demande de brevet européen EP 0 014 654 publiee le 20.08.80 et intitulée "Carte d'abonnement pour récepteur de vidéotex et poste de chargement de ladite carte".

**Revendications**

1. Système de transmission d'information entre un centre d'émission (2) et des postes récepteurs (4), le centre d'émission comprenant un circuit (6) de formation de signaux véhiculant ladite information, un automate de verrouillage (24) utilisant une clé de service (K), cet automate recevant des signaux véhiculant l'information et délivrant des signaux verrouillés qui sont dirigés ensuite vers un organe (12) d'émission desdits signaux, chaque poste récepteur comprenant un organe (14) de réception des signaux transmis, un automate de déverrouillage (38) relié à l'organe (14) de réception, cet automate déverrouillant les signaux verrouillés en utilisant la clé de service (K) et délivrant des signaux déverrouillés qui sont dirigés vers un moyen (20) de visualisation de l'information, caractérisé en ce qu'il comprend en outre:

A) un centre de gestion d'abonnement 100 engendrant une pluralité de signaux constituant des clés d'abonnement $C_i$, ces clés d'abonnement changeant de manière aléatoire à des intervalles relativement longs de l'ordre du mois;

B) dans le centre d'émission:

a) un générateur (22) apte à engendrer une clé de service (K) changeant de manière aléatoire à des intervallves relativement courts de l'ordre de quelques minutes;

b) un circuit (102) de formation de messages $M_i$, obtenus à partir desdites clés d'abonnement $C_i$ et de la clé de service (K) par un algorithme paramétré par les clés d'abonnement, soit $M_i=F_c(K)$, ce circuit délivrant autant de messages qu'il y a de clés d'abonnement, ces messages changeant avec la clé de service, l'ensemble des messages $M_i$ étant ensuite dirigé vers l'organe d'émission;

C) dans chaque poste récepteur:

a) un support d'abonnement (108) sur lequel est inscrit un signal correspondant à l'une au moins des clés d'abonnement $C_i$;

b) un circuit (110) de restitution de la clé de service recevant d'une part les messages $M_i$ reçus et, d'autre part, la clé d'abonnement $C_i$, ce circuit déroulant un algorithme $K=G_{C_i}(M_i)$ qui permet de restituer le signal correspondant à la clé de service (K) employée dans le poste d'émission à partir des messages $M_i$ reçus et de la clé d'abonnement $C_i$;

c) l'automate de déverrouillage (38) est relié au circuit de restitution (110) d'où il reçoit la clé de service (K);

D) au moins un poste de chargement (112) des supports d'abonnement, ce poste étant relié au centre de gestion d'abonnement (100) d'où il reçoit les signaux correspondant aux différentes clés d'abonnement $C_i$ engendrées par ce centre, chaque poste (112) étant apte à recevoir temporairement des supports d'abonnement (108) et à y inscrire durablement l'une des clés d'abonnement $C_i$.

2. Système de transmission d'information selon la revendication 1, caractérisé en ce que les signaux correspondant aux clés d'abonnement $C_i$, à la clé de service (K) et aux messages $M_i$, sont tous de type numérique binaire.

3. Système de transmission d'information selon l'une quelconque des revendications 1 et 2, caractérisé en ce que les moyens de transmission utilisent un canal de télévision.

4. Système de transmission d'information selon la revendication 3, caractérisé en ce que les moyens de transmission utilisent la procédure DIDON.

5. Système de transmission d'information selon l'une quelconque des revendications 1 à 4, caractérisé en ce qu'il s'agit d'un système de vidéographie.

6. Système selon la revendication 1, caractérisé en ce qu'il comprend des moyens pour organiser l'ensemble des messages $M_i$ en une page spéciale et pour transmettre cycliquement en clair cette page vers les postes récepteurs, cette page n'étant pas visualisable.

7. Système selon la revendication 1, caractérisé en ce que le circuit (102) de formation des messages $M_i$ par combinaison des signaux correspondant aux clés d'abonnement $C_i$ avec le signal correspondant à la clé de service (K) comprend des moyens pour dérouler l'algorithme suivant:

— calculer un mot $\pi$ de 61 éléments binaires engendrés au hasard,
— calculer l'inverse $\pi^{-1}$ de $\pi$, modulo $2^{61}-1$,
— calculer le mot $v=K \cdot \pi^{-1}$, modulo $2^{61}-1$,
— calculer le mot $\gamma$ inverse de $C_i$, modulo $2^{127}-1$,
— calculer enfin le mot $M_i=\gamma(v+2^{64}\pi)$, modulo $2^{127}-1$.

8. Système selon la revendication 7, caractérisé en ce que, dans le poste récepteur, le circuit (110) de restitution de la clé de service à partir des messages $M_i$ et de la clé de service (K) est apte à dérouler l'algorithme suivant:

a) un message $M_i$ de 127 éléments binaires utiles, est saisi octet par octet, et une multiplication par $C_i$ est effectuée pour former un mot $\mu$:

$$\mu=M \cdot C \bmod (2^{127}-1)$$

les éléments binaires 1 à 61 de $\mu$ représentant un mot $v$, tandis que les éléments binaires 65 à 125 représentent un mot $\pi$;

b) $\pi$ et $v$ sont multipliés, modulo $2^{61}-1$, ce qui donne K.

**Patentansprüche**

1. System zur Informationsübertragung zwischen einer Sendezentrale (2) und Empfangsstationen (4), wobei die Sendezentrale einen Erzeugungskreis (6) für die die Information übertragenden Signale und einen Verschlüsselungsautomat (24) aufweist, der einen Betriebsschlüssel (K) verwendet und die die Information übertragenden Signale von diesem Automat erhält und verschlüsselte Signale erzeugt, die einem Sendeorgan (12) für die Signale zuführbar sind, und wobei jede Empfangsstation ein Empfangsorgan (14) für die gesendeten Signale und einen mit dem Empfangsorgan (14) verbundenen Entschlüsselungsautomat (38) aufweist, mit dem die verschlüsselten Signale unter Verwendung des Betriebsschlüssels (K) entschlüsselbar und entschlüsselte Signale erzeugbar sind, welche einer Einrichtung (20) zum Sichtbarmachen der Information zuführbar sind, dadurch gekennzeichnet, daß das System ferner umfaßt:

A) eine Abonnentenverwaltungszentrale (100), die eine Vielzahl von Signalen erzeugt, welche Abonnentenschlüssel $C_i$ bilden, die sich in zufälliger Weise in relativ langen Intervallen in der Größenordnung von Monaten ändern;

B) in der Sendezentrale:

a) einen Generator (22), mit dem ein Betriebsschlüssel K erzeugt werden kann, welcher sich in zufälliger Weise in relativ kurzen Intervallen in der Größenordnung von einigen Minuten ändert;

b) einen Kreis (102) zum Erzeugen von Meldungen $M_i$, die ausgehend von den Abonnentenschlüsseln $C_i$ und dem Betriebsschlüssel (K) durch einen durch den Abonnentenschlüssel parametrisierten Algorithmus, d.h. $M_i = F_{c_i}$ (K) erhalten werden, wobei dieser Kreis so viele Meldungen abgibt, wie Abonnentenschlüssel vorliegen, die Meldungen sich mit dem Betriebsschlüssel ändern und die Gesamtheit der Meldungen $M_i$ anschließend dem Sendeorgan zugeführt werden;

C) in jeder Empfangsstation:

a) einen Abonnententräger (108), auf dem ein Signal eingeschrieben ist, welches wenigstens einem der Abonnentenschlüssel $C_i$ entspricht;

b) einen Kreis (110) zum Rückbilden des Betriebsschlüssels, welcher einerseits die Meldungen $M_i$ und andererseits den Abonnenntenschlüssel $C_i$ empfängt und einen Algorithmus $K = G_{c_i}$ ($M_i$) durchführt, mit dem das Signal, welches dem Betriebsschlüssel K, der in der Sendezentrale verwendet wird, entspricht, aufgrund der empfangenen Meldungen $M_i$ und des Abonnentenschlüssels $C_i$ rückgebildet werden kann;

c) wobei der Entschlüsselungsautomat (38) mit dem Kreis (110) zur Rückbildung verbunden ist, von dem er den Betriebsschlüssel (K) erhält;

D) wenigstens eine Eingabestelle (112) für die Abonnententräger, die mit der Abonnentenverwaltungszentrale (100) verbunden ist, von der sie die Signale empfängt, die ein verschiedenen, von dieser Zentrale erzeugten Abonnentenschlüsseln $C_i$ entsprechen, und die vorübergehend Abonnententräger (108) aufnehmen und auf diese in dauerhafter Weise einen der Abonnentenschlüssel $C_i$ einschreiben kann.

2. System zur Informationsübertragung nach Anspruch 1, dadurch gekennzeichnet, daß die Signale, die den Abonnentenschlüsseln $C_i$, dem Betriebsschlüssel (K) und den Meldungen $M_i$ entsprechen, alle vom numerischen, binären Typ sind.

3. System zur Informationsübertragung nach Anspruch 1 oder 2, dadurch gekennzeichnet, daß die Übertragungsmittel einen Fernsehkanal verwenden.

4. System zur Informationsübertragung nach Anspruch 3, dadurch gekennzeichnet, daß die Übertragungsmittel das DIDON-Verfahren verwenden.

5. System zur Informationsübertragung nach irgendeinem der Ansprüche 1 bis 4, dadurch gekennzeichnet, daß es sich um ein Videotext-System handelt.

6. System nach Anspruch 1, dadurch gekennzeichnet, daß es Mittel umfaßt, um die Gesamtheit der Meldungen $M_i$ auf einer besonderen Seite zu organisieren und im Klartext diese Seite zyklisch zu den Empfangsstationen zu senden, wobei diese Seite nicht sichtbar gemacht werden kann.

7. System nach Anspruch 1, dadurch gekennzeichnet, daß der Kreis (102) zur Erzeugung der Meldungen $M_i$ durch Kombination der den Abonnentenschlüsseln $C_i$ entsprechenden Signale mit dem dem Betriebsschlüssel (K) entsprechenden Signal Mittel umfaßt, um den folgenden Algorithmus durchzuführen:

— berechnen eines Wortes von 61 zufällig erzeugten Binärelementen,
— berechnen des Inversen $\pi^{-1}$ von $\pi$, Modulo $2^{61}-1$,
— berechnen des Wortes $v = K \cdot \pi^{-1}$, Modulo $2^{61}-1$,
— berechnen des Wortes $\gamma$, das Inverse von $C_i$ Modulo $2^{127}-1$,
— schließlich berechnen des Wortes $M_i = \gamma(v + 2^{64}\pi)$, Modulo $2^{127}-1$.

8. System nach Anspruch 7, dadurch gekennzeichnet, daß in der Empfangsstation der Kreis (110) zur Rückbildung des Betriebsschlüssel aufgrund der Meldungen $M_i$ und des Betriebsschlüssels (K) den folgenden Algorithmus durchführen kann:

a) eine Meldung $M_i$ von 127 verwendbaren Binärelementen wird Oktett nach Oktett erfaßt und eine Multiplikation $C_i$ wird durchgeführt, um ein Wort $\mu$ zu bilden:

$$\mu = M \cdot C \text{ Modulo } (2^{127}-1)$$

wobei die Binärelemente 1 bis 61 von $\mu$ ein Wort darstellen, während die Binärelemente 65 bis 125 ein Wort $\pi$ darstellen;

b) $\pi$ und $v$ werden multipliziert Modulo $2^{61}-1$, was K ergibt.

## Claims

1. System for the transmission of data between a transmitting station (2) and receiving stations (4), the transmitting station comprising a circuit (6) for the formation of signals carrying said data, an automatic encoder (24) using a service key (K), said automatic encoder receiving data-bearing signals and delivering encoded signals which are sent to a transmitter (12) for said signals, each receiving station comprising a receiver (14) for transmitted signals, and an automatic decoder (38) connected to the receiver (14), said automatic decoder functioning to decode encoded signals using the service key (K), and delivering decoded signals which are sent to data-display means (20), characterized in that it additionally comprises:

A) a subscription-administration centre (100) generating a plurality of signals constituting subscription keys $C_i$, said subscription keys changing randomly at relatively long intervals of the order of months;

B) the transmission station comprising:

a) a generator (22) adapted to generate a service key (K) which changes randomly at relatively short intervals of the order of minutes; and

b) a circuit (102) for the formation of messages $M_i$, obtained from said subscription keys $C_i$ and the service key (K) by an algorithm

$$M_i = F_c(K)$$

whose parameters are the subscription keys, said circuit delivering as many messages as there are subscription keys, said messages changing with the service key, the assembled messages being then sent to the transmitter (12);

C) each receiving station comprising:

a) a subscription token (108) into which is written a signal corresponding to at least one of the subscription keys $C_i$;

b) a service key reconstitution circuit (110) receiving, on the one hand, messages $M_i$ and, on the other hand, the subscription key $C_i$, said circuit acting to execute an algorithm

$$K = G_{c_i} (M_i)$$

enabling reconstitution of the service key (K) used at the transmission station from the received messages $M_i$ and the subscription key $C_i$; and

c) the automatic decoder (38) connected to the reconstitution circuit (110) from which it receives the service key (K); and D) at least one recharging station (112) for subscription tokens, said station being connected to the subscription-administration centre (100) from which it receives signals corresponding to the different subscription keys $C_i$ generated by said centre, each station (112) being adapted to receive temporarily the subscription tokens (108) and to write durably therein one of the subscription keys $C_i$.

2. Data-transmission system according to Claim 1, characterized in that the signals corresponding to the subscription keys $C_i$, to the service key (K), and to the messages $M_i$, are of the binary digital type.

3. Data-transmission system according to either of Claims 1 and 2, characterized in that the transmission means utilize a television channel.

4. Data-transmission system according to Claim 3, characterized in that the transmission means utilize the DIDON system.

5. Data-transmission system according to any of Claims 1 to 4, characterized in that it acts as a videographic system.

6. System according to Claim 1, characterized in that it comprises means for organizing the assembled messages $M_i$ into a special page and to transmit said page cyclically in clear to said receiving stages, said page not being visualizable.

7. System according to Claim 1, characterized in that the circuit (102) for formation of messages $M_i$ by combining signals corresponding to the subscription keys $C_i$ with the signal corresponding to the service key (K) comprise the following means for executing the algorithm:

— calculating a word $\pi$ of 61 randomly-generated binary digits,
— calculating the reciprocal $\pi^{-1}$ of $\pi$, modulo $2^{61}-1$,
— calculating the word $v = K . \pi^{-1}$, modulo $2^{61}-1$,
— calculating the reciprocal word $\gamma$ from $C_i$, modulo $2^{127}-1$, and
— finally calculating the word

$$M_i = \gamma(v + 2^{64}\pi), \text{ modulo } 2^{127}-1.$$

8. System according to Claim 7, characterized in that, in each receiving station, the circuit (110) for reconstituting the service key from the messages $M_i$ and the service key (K), is adapted to execute the algorithm as follows:

a) a message $M_i$ having 127 usable binary digits, is taken octet by octet, and multiplication by $C_i$ is carried out to form a word $\mu$:

$$\mu = M . C \text{ modulo } (2^{127}-1)$$

the binary digits 1 to 61 from $\mu$ representing a word $v$, while the binary digits 65 to 125 represent a word $\pi$; and

b) $\pi$ and $v$ are multiplied, modulo $2^{61}-1$, thereby giving K.

FIG. 1

FIG. 2

FIG. 3